# NEW EUROPEAN PATENT SPECIFICATION

(11) **EP 0 592 195 B3**
(45) Date of publication of this specification: **14.11.2012**
(45) Mention of the grant of the patent: 13.03.1996
(21) Application number: 93307915.4
(22) Date of filing: 05.10.1993
(51) Int. Cl.: F16C 33/62

(54) **Ball-bearing**
Kugellager
Roulement à billes

(30) Priority: 07.10.1992 JP 29385792
(43) Date of publication of application: 13.04.1994
(73) Proprietor: Minebea Kabushiki Kaisha, Kitasaku-gun, Nagano-ken (JP)
(72) Inventor: Obara, Rikuro, c/o Minebea Kabushiki-Kaisha, Kitasaku-gun, Nagano-Ken (JP); Tatsuno, Katashi, c/o Minebea Kabushiki-Kaisha, Kitasaku-gun, Nagano-Ken (JP)
(74) Representative: Bradley, Adrian

(56) References cited:
- DE-A1- 2 031 519
- DE-A1- 2 049 206
- GB-A- 2 245 318
- GB-A- 2 259 714
- PATENT ABSTRACTS OF JAPAN vol. 016, no. 157 (M-1236)16 April 1992 & JP-A-40 08 876 ( HITACHI ) 13 January 1992

## Description

This invention relates to ball-bearings suitable for rotary parts of precision machines.

In the usual ball-bearing, the outer and inner rings and balls are made of the same material, i.e. usually martensitic stainless steel or high carbon chromium bearing steel.

Stainless steel is satisfactorily corrosion-resistant. However, unlike high carbon chromium bearing steel, with conventional stainless steel balls it is difficult to obtain high machining accuracy. Therefore, stainless steel ball-bearings have been unsuitable for rotary parts of precision machines requiring high degree of quietness.

With high carbon chromium bearing steel ball-bearings, on the other hand, it is possible to obtain high machining accuracy. Thus, it is possible to obtain excellent quietness during rotation. On the demerit side, however, the material is readily subject to rusting. Therefore, it has been necessary to apply rust prevention oil on the outer surface.

However, when assembling a ball-bearing in a precision machine, an adhesive is often used. The rust prevention oil reacts chemically with the adhesive to give rise to gas generation, deterioration of the bonding strength, rusting and so forth, thus reducing the reliability of the assembled parts.

Particularly, when this kind of ball-bearing is used for a spindle motor or the like in a hard disk drive, there often occurs a case, in which gas generated as a result of chemical reaction between the rust prevention oil and adhesive adheres to the recording medium surface and causes trouble in the apparatus.

An object of the invention is to provide a ball-bearing which can solve the above problems inherent in the prior art and is excellently quiet and free from rust prevention oil requirement.

In the prior art, the outer and inner rings and balls as the components of a ball-bearing have been made of the same material. To attain the above object of the invention, there is provided a ball-bearing, in which the balls between the outer and inner rings that require machining accuracy and rotational accuracy are made of high carbon chromium bearing steel while the inner and outer rings or at least one thereof, requiring the corrosion resistance and stable bonding strength, are made of martensitic stainless steel with a hardness of HRC (Rockwell hardness) 58 or above and a eutectic carbide diameter or particle size of 10 µm or below, depending on actual operating conditions.

The invention will now be described by way of example only with reference to the accompanying drawing in which:
FIG. 1 is a sectional view showing a first embodiment of the invention; and
FIG. 2 is a sectional view showing a second embodiment of the invention.

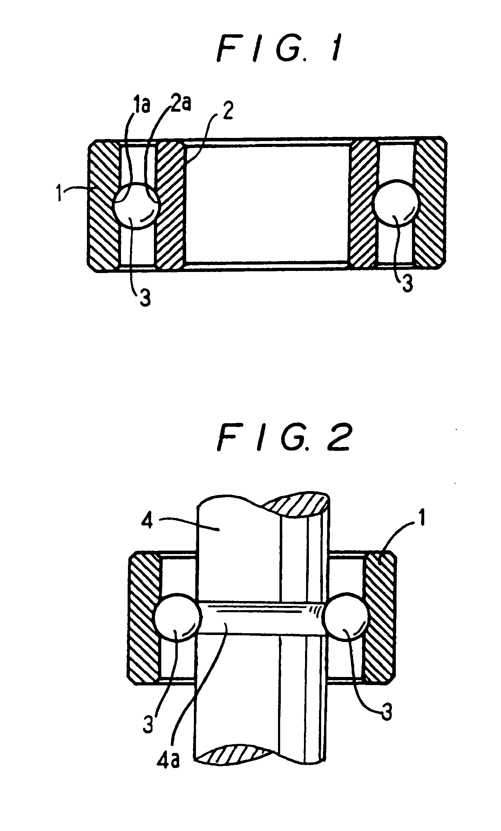

Fig. 1 is a sectional view showing an embodiment of the invention. In the figure, designated at 1 is an outer ring, at 2 an inner ring, and at 3 balls.

A plurality of balls 3 are made of high carbon chromium bearing steel and disposed between a ball race 1a formed in the inner periphery of the outer ring 1 and a ball race 2a formed in the outer periphery of the inner ring 2.

The outer and inner rings 1 and 2 are made of martensitic stainless steel, which, for enhancing the high temperature strength and wear resistance, is composed of 0.6 to 0.75% of carbon, 10.5 to 13.5% of chromium, and 0.3 to 0.8% of manganese, the remainder being iron and inevitably introduced impurities, and is obtained through heat treatment control such as to make the hardness to be HRC 58 or above and the eutectic carbide diameter to be 10 µm or below.

Reducing the diameter of the eutectic carbide leads to improvement of the machining accuracy and surface roughness of the ball race surfaces.

Further, since this stainless steel is excellently corrosion-resistant, there is no need of using any rust prevention oil, and thus it is possible to eliminate troubles, bonding strength reduction and so forth that might otherwise result from gas generated as a result of chemical reduction between rust prevention oil conventionally used for ball-bearings and adhesive used when assembling the ball-bearing in various precision machines.

Table 1 shows results (Andelon value) of vibration and noise evaluation tests conducted with this embodiment of the ball-bearing in conformity with AFBMA (The Anti-Friction Bearing Manufactures Association, Inc) standards in comparison with results of tests with prior art ball-bearings.

**Table 1**

| Material | | | | Andelon value | | |
|---|---|---|---|---|---|---|
| | Outer ring | Inner ring | Ball | L | M | H |
| Embodiment | B | B | A | 0.765 | 0.285 | 0.225 |
| Pr. A. Ex. 1 | A | A | A | 0.787 | 0.280 | 0.195 |
| Pr. A. Ex. 2 | B | B | B | 1.05 | 0.473 | 0.418 |

In the Table, A represents high carbon chromium bearing steel, and B martensitic stainless steel noted above. The Andelon values are shown in columns L, M and H corresponding to respective measurement frequency regions, specifically a low frequency region (50 to 300 Hz), a middle frequency region (300 to 1,800 Hz) and a high frequency region (1,800 to 10,000 Hz), respectively.

From these results, it will be seen that with the embodiment of the ball-bearing according to the invention the quietness is greatly improved compared to prior art Example 2 of the ball-bearing, in which the inner and outer rings and balls are all made of martensitic stainless steel, and comparable to that of prior art Example 1 of ball-bearing, in which the inner and outer rings and balls are all made of high carbon chromium bearing steel.

Fig. 2 shows a different embodiment of the invention, in which a plurality of balls 3 are provided between a ball race formed in the outer periphery of a shaft 4 and a ball race 1a formed in the inner periphery of an outer ring 1.

Again in this embodiment, like the preceding embodiment shown in Fig. 1, the stainless steel is used for the outer ring 1 and shaft 4 while using high carbon chromium bearing material for the balls 3.

The same martensitic stainless steel is used for the two parts, i.e. the outer and inner rings in the first embodiment and the outer ring and shaft in the second embodiment.

Depending on operating conditions, however, it is possible to use the martensitic stainless steel for only one of these parts which requires the corrosion resistance and stable bonding strength, while using high carbon chromium bearing steel or the like for the other part.

In the ball-bearing according to the invention, the martensitic stainless steel used for the outer and inner rings 1 and 2 or for the outer ring 1 and shaft 4 has a eutectic carbide diameter of 10 µm or below, while high carbon chromium bearing steel is used for the balls 3. It is thus possible to increase the machining accuracy of the balls and ball races and thus obtain a ball-bearing which is excellent in quietness.

Further, since the outer and inner rings 1 and 2 or the outer ring 1 and shaft 4 that constitute the outer surfaces of the ball-bearing are made of martensitic stainless steel containing carbon, chromium, manganese and iron, it is possible to obtain excellent high temperature strength, wear resistance and corrosion resistance.

Thus, there is no need of using any rust prevention oil. This means that no time is required for wiping out rust prevention oil when assembling, for instance, a miniature bearing in a precision machine. Besides, the reliability of the bonding strength can be improved. Further, it is possible to eliminate troubles that might otherwise result from generation of gas as a result of chemical reaction between rust prevention oil and adhesive.

## Claims

1. A ball-bearing comprising an inner race member (2,4), an outer race member (1) and a plurality of balls (3) of high carbon steel provided between said race members, **characterised in that** at least one of said race members is made of martensitic stainless steel composed of 0.6 to 0.75% of carbon, 10.5 to 13.5% of chromium, and 0.3 to 0.8% of manganese, the remainder being iron and inevitably introduced impurities with a hardness of HRC 58 or above and a eutectic carbide particle size of 10 µm or below.

2. A ball-bearing comprising an inner race member (2,4), an outer race member (1) and a plurality of balls (3) of high carbon steel provided between said race members, **characterised in that** at least one of said race members is made of martensitic stainless steel with a hardness of HRC 58 or above and a eutectic carbide particle size of 10 µm or below, and that the ball bearing is free from rust prevention oil.

3. A ball-bearing suitable for a hard disk drive comprising an inner race member (2,4), an outer race member (1) and a plurality of balls (3) of high carbon steel provided between said race members, **characterised in that** at least one of said race members is made of martensitic stainless steel with a hardness of HRC 58 or above and a eutectic carbide particle size of 10 µm or below.

4. The ball-bearing according to claim 1 or 2 wherein said ball-bearing is suitable for a hard disk drive.

5. The ball-bearing according to claim 2 or 3 wherein said martensitic stainless steel composed of 0.6 to 0.75% of carbon, 10.5 to 13.5% of chromium, and 0.3 to 0.8% of manganese, the remainder being iron and inevitably introduced impurities.

6. The ball-bearing according to claim 1 or 3 wherein the bearing is free from rust prevention oil.

7. The ball-bearing according to any one of claims 1 to 6 wherein said plurality of balls (3) are of high carbon chromium bearing steel.

8. The ball-bearing according to any one of claims 1 to 7 wherein said inner race member is constituted by an inner ring (2) and said outer race member is constituted by an outer ring (1).

9. The ball-bearing according to claim 8, wherein said inner ring is made of martensitic stainless steel with a hardness of HRC 58 or above and a eutectic carbide particle size of 10 µm or below.

10. The ball-bearing according to claim 8, wherein said outer ring (1) is made of martensitic stainless steel with a hardness of HRC 58 or above and a eutectic carbide particle size of 10 µm or below.

11. The ball-bearing according to claim 8, wherein both said inner and outer rings (2,1) are made of martensitic stainless steel with a hardness of HRC 58 or above and a eutectic carbide particle size of 10 µm or below.

12. The ball-bearing according to any one of claims 1 to 6, wherein said inner race member comprises a shaft (4) with an outer periphery ball race and said outer race member comprises an outer ring (1) with an inner periphery ball race.

13. The ball-bearing according to claim 12, wherein said outer ring (1) is made of martensitic stainless steel with a hardness of HRC 58 or above and a eutectic carbide particle size of 10 µm or below.

14. The ball-bearing according to claim 12, wherein said shaft (4) is made of martensitic stainless steel with a hardness of HRC 58 or above and a eutectic carbide particle size of 10 µm or below.

15. The ball-bearing according to claim 12, wherein said shaft (4) and outer ring (1) are both made of martensitic stainless steel with a hardness of HRC 58 or above and a eutectic carbide particle size of 10 µm or below.

## Patentansprüche

1. Kugellager, umfassend ein Innenringglied (2,4), ein Außenringglied (1) und eine Vielzahl zwischen den Ringgliedern vorgesehener Kugeln (3) aus Hartstahl, **dadurch gekennzeichnet, dass** zumindest eines der Ringglieder aus martensitischem rostfreiem Stahl, der aus 0,6 bis 0,75% Kohlenstoff, 10,5 bis 13,5% Chrom und 0,3 bis 0,8% Mangan aufgebaut ist, wobei der Rest Eisen und zwangsläufig vorhandene Verunreinigungen sind, mit einer Härte von HRC 58 oder darüber und einer eutektischen Karbidteilchengröße von 10 µm oder darunter gefertigt ist.

2. Kugellager, umfassend ein Innenringglied (2,4), ein Außenringglied (1) und eine Vielzahl zwischen den Ringgliedern vorgesehener Kugeln (3) aus Hartstahl, **dadurch gekennzeichnet, dass** zumindest eines der Ringglieder aus martensitischem rostfreiem Stahl mit einer Härte von HRC 58 oder darüber und einer eutektischen Karbidteilchengröße von 10 µm oder darunter gefertigt ist, und dass das Kugellager frei von Rostschutzöl ist.

3. Kugellager für ein Festplattenlaufwerk, umfassend ein Innenringglied (2,4), ein Außenringglied (1) und eine Vielzahl zwischen den Ringgliedern vorgesehener Kugeln (3) aus Hartstahl, **dadurch gekennzeichnet, dass** zumindest eines der Ringglieder aus martensitischem rostfreiem Stahl mit einer Härte von HRC 58 oder darüber und einer eutektischen Karbidteilchengröße von 10 µm oder darunter gefertigt ist.

4. Das Kugellager nach Anspruch 1 oder 2, wobei das Kugellager für ein Festplattenlaufwerk geeignet ist.

5. Das Kugellager nach Anspruch 2 oder 3, wobei der martensitische rostfreie Stahl aus 0,6 bis 0,75% Kohlenstoff, 10,5 bis 13,5% Chrom und 0,3 bis 0,8% Mangan aufgebaut ist, wobei der Rest Eisen und zwangsläufig vorhandene Verunreinigungen sind.

6. Das Kugellager nach Anspruch 1 oder 3, wobei das Kugellager frei von Rostschutzöl ist.

7. Das Kugellager nach einem der Ansprüche 1 bis 6, wobei die Vielzahl an Kugeln (3) aus Hartchromlagerstahl bestehen.

8. Das Kugellager nach einem der Ansprüche 1 bis 7, wobei das Innenringglied aus einem Innenring (2) und das Außenringglied aus einem Außenring (1) aufgebaut ist.

9. Das Kugellager nach Anspruch 8, wobei der Innenring aus martensitischem rostfreiem Stahl mit einer Härte von HRC 58 oder darüber und einer eutektischen Karbidteilchengröße von 10 µm oder darunter gefertigt ist.

10. Das Kugellager nach Anspruch 8, wobei der Außenring (1) aus martensitischem rostfreiem Stahl mit einer Härte von HRC 58 oder darüber und einer eutektischen Karbidteilchengröße von 10 µm oder darunter gefertigt ist.

11. Das Kugellager nach Anspruch 8, wobei sowohl der Innenring als auch der Außenring (2, 1) aus martensitischem rostfreiem Stahl mit einer Härte von HRC 58 oder darüber und einer eutektischen Karbidteilchengröße von 10 µm oder darunter gefertigt sind.

12. Das Kugellager nach einem der Ansprüche 1 bis 6, wobei das Innenringglied eine Welle (4) mit einem Außenumfangslaufring und das Außenringglied einen Außenring (1) mit einem Innenumfangslaufring umfaßt.

13. Das Kugellager nach Anspruch 12, wobei der Außenring (1) aus martensitischem rostfreiem Stahl mit einer Härte von HRC 58 oder darüber und einer eutektischen Karbidteilchengröße von 10 µm oder darunter gefertigt ist.

14. Das Kugellager nach Anspruch 12, wobei die Welle (4) aus martensitischem rostfreiem Stahl mit einer Härte von HRC 58 oder darüber und einer eutektischen Karbidteilchengröße von 10 µm oder darunter gefertigt ist.

15. Das Kugellager nach Anspruch 12, wobei sowohl die Welle (4) als auch der Außenring (1) jeweils aus martensitischem rostfreiem Stahl mit einer Härte von HRC 58 oder darüber und einer eutektischen Karbidteilchengröße von 10 µm oder darunter gefertigt sind.

## Revendications

1. Roulement à billes comprenant un élément de roulement intérieur (2, 4), un élément de roulement extérieur (1) et une pluralité de billes (3) d'acier à haute teneur en carbone prévues entre lesdits éléments de roulement, **caractérisé en ce qu'**au moins un desdits éléments de roulement est fait en acier inoxydable martensitique composé de 0,6 à 0,75% de carbone, de 10,5 à 13,5% de chrome et de 0,3 à 0,8% de manganèse, le reste étant du fer et les impuretés inévitablement introduites avec une dureté de 58 HRC ou supérieure et un calibre de carbure eutectique de 10 µm ou inférieur.

2. Roulement à billes comprenant un élément de roulement intérieur (2, 4), un élément de roulement extérieur (1) et une pluralité de billes (3) d'acier à haute teneur en carbone prévues entre lesdits éléments de roulement, **caractérisé en ce qu'**au moins un desdits éléments de roulement est fait en acier inoxydable martensitique avec une dureté de 58 HRC ou supérieure et un calibre de carbure eutectique de 10 µm ou inférieur, et **en ce que** le roulement à billes est dépourvu d'huile antirouille.

3. Roulement à billes approprié pour un lecteur de disque dur comprenant un élément de roulement intérieur (2, 4), un élément de roulement extérieur (1) et une pluralité de billes (3) d'acier à haute teneur en carbone prévues entre lesdits éléments de roulement, **caractérisé en ce qu'**au moins un desdits éléments de roulement est fait en acier inoxydable martensitique avec une dureté de 58 HRC ou supérieure et un calibre de carbure eutectique de 10 µm ou inférieur.

4. Roulement à billes selon la revendication 1 ou 2, dans lequel ledit roulement à billes est approprié pour un lecteur de disque dur.

5. Roulement à billes selon la revendication 2 ou 3, dans lequel ledit acier inoxydable martensitique est composé de 0,6 à 0,75% de carbone, de 10,5 à 13,5% de chrome et de 0,3 à 0,8% de manganèse, le reste étant du fer et les impuretés inévitablement introduites.

6. Roulement à billes selon la revendication 1 ou 3, dans lequel le roulement est dépourvu d'huile antirouille.

7. Roulement à billes selon l'une quelconque des revendications 1 à 6, dans lequel ladite pluralité de billes (3) est en acier chromifère à haute teneur en carbone.

8. Roulement à billes selon l'une quelconque des revendications 1 à 7, dans lequel ledit élément de roulement intérieur est constitué par un anneau interne (2) et ledit élément de roulement extérieur est constitué par un anneau externe (1).

9. Roulement à billes selon la revendication 8, dans lequel ledit anneau interne est fait en acier inoxydable martensitique avec une dureté de 58 HRC ou supérieure et un calibre de carbure eutectique de 10 µm ou inférieur.

10. Roulement à billes selon la revendication 8, dans lequel ledit anneau externe (1) est fait en acier inoxydable martensitique avec une dureté de 58 HRC ou supérieure et un calibre de carbure eutectique de 10 µm ou inférieur.

11. Roulement à billes selon la revendication 8, dans lequel à la fois lesdits anneaux interne et externe (2, 1) sont faits en acier inoxydable martensitique avec une dureté de 58 HRC ou supérieure et un calibre de carbure eutectique de 10 µm ou inférieur.

12. Roulement à billes selon l'une quelconque des revendications 1 à 6, dans lequel ledit élément de roulement intérieur comprend un arbre (4) avec un chemin périphérique extérieur de roulement à billes et ledit élément de roulement extérieur comprend un anneau externe (1) avec un chemin périphérique intérieur de roulement à billes.

13. Roulement à billes selon la revendication 12, dans lequel ledit anneau externe (1) est fait en acier inoxydable martensitique avec une dureté de 58 HRC ou supérieure et un calibre de carbure eutectique de 10 µm ou inférieur.

14. Roulement à billes selon la revendication 12, dans lequel ledit arbre (4) est fait en acier inoxydable martensitique avec une dureté de 58 HRC ou supérieure et un calibre de carbure eutectique de 10 µm ou inférieur.

15. Roulement à billes selon la revendication 12, dans lequel ledit arbre (4) et l'anneau externe (1) sont tous deux faits en acier inoxydable martensitique avec une dureté de 58 HRC ou supérieure et un calibre de carbure eutectique de 10 µm ou inférieur.
